# EUROPÄISCHE PATENTSCHRIFT

(11) **EP 1 468 183 B1**
(45) Veröffentlichungstag und Bekanntmachung des Hinweises auf die Patenterteilung: **15.08.2007**
(21) Anmeldenummer: 03731618.9
(22) Anmeldetag: 04.01.2003
(51) Int. Cl.: F02F 3/12, F02F 3/14, B23K 9/04

(54) **VERFAHREN ZUM VERSEHEN EINES GROSSMASCHINENBAUTEILS MIT EINEM SCHUTZBELAG**
METHOD FOR PROVIDING A COMPONENT OF A LARGE MACHINE WITH A PROTECTIVE COATING
PROCEDE DESTINE A POURVOIR UN COMPOSANT D'UNE GRANDE MACHINE D'UN REVETEMENT DE PROTECTION

(30) Priorität: 22.01.2002 DE 10202193
(43) Veröffentlichungstag der Anmeldung: 20.10.2004
(73) Patentinhaber: MAN B & W Diesel A/S, 2450 Copenhagen SV (DK)
(72) Erfinder: HOEG, Harro, Andreas, DK-3450 Allerød (DK)
(74) Vertreter: Munk, Ludwig
(86) Internationale Anmeldenummer: PCT/EP2003/000038
(87) Internationale Veröffentlichungsnummer: WO 2003/062622

(56) Entgegenhaltungen:
- EP-A- 0 460 901
- EP-A- 0 599 737
- GB-A- 671 606
- US-A- 3 715 790
- US-A- 4 562 327
- US-A- 5 293 026

## Beschreibung

Die Erfindung betrifft ein Verfahren zum Versehen eines Großmaschinenbauteils, insbesondere eines Kolbenkopfes oder Auslassventiltellers eines Zweitakt-Großdieselmotors, mit einem Schutzbelag, der durch Auftragschweißen auf die zugeordnete Oberfläche aufgebracht wird.

Bei der Durchführung eines Verfahrens oben genannter Art ergibt sich eine aufgrund des Schweißvorgangs sehr starke Wärmebeaufschlagung des mit dem Schutzbelag zu versehenden Bauteils. Es besteht daher die Gefahr, dass die zulässige Temperatur des dem genannten Bauteil zugrundeliegenden Materials überschritten wird. Diese Gefahr ist dann besonders hoch, wenn der Schutzbelag eine vergleichsweise große Masse aufweist, wovon bei einem Schutzbelag für ein Großmaschinenbauteil oben genannter Art auszugehen ist.

Es war daher bei der Herstellung eines durch Auftragschweißung erzeugten Schutzbelags bisher notwendig, den Schweißvorgang mehrmals zu unterbrechen um das Bauteil abkühlen zu lassen. Das ist Zeitaufwendig und unwirtschaftlich. Zudem können sich Unterbrechungen des Schweißvorgangs mit zwischenzeitlicher Abkühlung auch ungünstig auf die erreichbare Festigkeit des Schutzbelags auswirken. Insbesondere Legierungen auf Nickelbasis sind diesbezüglich besonders empfindlich. Außerdem begünstigen Unterbrechungen des Schweißvorgangs die Entstehung eines gewissen Verzugs, was vielfach eine hohe Nacharbeit erforderlich macht.

Hiervon ausgehend ist es daher die Aufgabe der vorliegenden Erfindung, ein Verfahren eingangs erwähnter Art mit einfachen und kostengünstigen Mitteln so zu verbessern, dass eine wirtschaftliche und dennoch schonende Verfahrensdurchführung möglich ist.

Diese Aufgabe wird erfindungsgemäß dadurch gelöst, dass das mit dem Schutzbelag zu versehende Großmaschinenbauteil während des Auftragschweißvorgangs gekühlt wird, wobei die Kühlung so erfolgt, dass zumindest nach einer bestimmten Anlaufzeit die durch den Auftragschweißvorgang zugeführte Wärme der durch das Kühlmittel abgeführten Wärme in etwa entspricht.

Diese Maßnahmen stellen sicher, dass der Schutzbelag bzw. im Falle eines mehrlagigen Schutzbelags jede Lage ohne Unterbrechung aufgeschweißt werden können. Es ergibt sich daher eine zeitsparende, wirtschaftliche Verfahrensdurchführung. Dennoch kann die Temperatur des zu beschichtenden Bauteils unterhalb einer kritischen Grenze gehalten werden, so dass das den Schutzbelag aufnehmende Basismaterial nicht geschädigt wird. Aufgrund der niedrigen Temperatur des Basismaterials beim Schweißen wird auch ein eventueller Wärmeverzug minimiert. Eine hierdurch verursachte permanente Deformation des Basismaterials und hieraus resultierende innere Spannungen werden daher weitgehend vermieden, was eine hohe Stabilität des gesamten Bauteils gewährleistet. Dadurch, dass die während des Schweißvorgangs erfolgende Kühlung des zu beschichtenden Großmaschinenbauteils zweckmäßig so durchgeführt werden, dass die durch den Auftragschweißvorgang zugeführte Wärme der durch das Kühlmittel abgeführten Wärme in etwa entspricht, stellt sich nach einer gewissen Anlaufzeit ein Gleichgewichtszustand ein. Hierdurch wird daher sichergestellt, dass auch bei einer die Anlaufzeit übersteigenden, vergleichsweise langen Dauer des Schweißvorgangs, d.h. bei der Bearbeitung sehr großer Bauteile, ab einer bestimmten Temperatur keine nennenswerte Temperatursteigerung mehr stattfindet. Mit den erfindungsgemäßen Maßnahmen werden dementsprechend die eingangs geschilderten Nachteile und Schwierigkeiten vollständig beseitigt.

Vorteilhafte Ausgestaltungen und zweckmäßige Fortbildungen der übergeordneten Maßnahmen sind in den Unteransprüchen angegeben.

Zweckmäßig kann als Kühlmittel Wasser Verwendung finden. Dieses Medium steht vergleichsweise kostengünstig zur Verfügung und kann daher im Durchlaufverfahren angewandt werden, so dass ein Umwälz- und Aufbereitungsaufwand entfällt.

Vorteilhaft kann das Kühlmittel auf die zugeordnete Oberfläche aufgesprüht werden. Dies ergibt eine gute Verteilung des Kühlmittels auch im Falle einer unregelmäßigen Bauteilgeometrie.

Eine weitere zweckmäßige Maßnahme kann darin bestehen, dass das zu beschichtende Bauteile zum Aufschweißen des Schutzbelags so angeordnet wird, dass es von oben mit dem Schutzbelag versehen und von unten gekühlt wird. Hierdurch wird erreicht, dass das Kühlmittel selbsttätig nach unten ablaufen kann.

In weiterer Fortbildung der übergeordneten Maßnahmen wird das Kühlmittel in einen von einer umlaufenden Wand umfassten Raum hineingesprüht. Hierdurch wird sichergestellt, dass das Kühlmittel nicht in Kontakt mit dem aufgeschweißten Material kommen kann.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine schematische Darstellung eines ersten Anwendungsbeispiels anhand eines Auslassventils eines Zweitakt-Großdieselmotors und
- Figur 2: eine schematische Darstellung eines zweiten Anwendungsbeispiels anhand eines Kolbenkopfes eines Zweitakt-Großdieselmotors.

Hauptanwendungsgebiet der Erfindung sind mit einem als Auftragschweißung herzustellenden Schutzbelag zu versehende Bauteile von Großmaschinen, wie Zweitakt-Großdieselmotoren, wobei der aufzuschweißende Schutzbelag eine vergleichsweise hohe Masse von mindestens 10 kg und mehr aufweist, was beim Schutzbelag eines Auslassventils oder eines Kolbenkopfes eines Zweitakt-Großdieselmotors in der Regel der Fall ist.

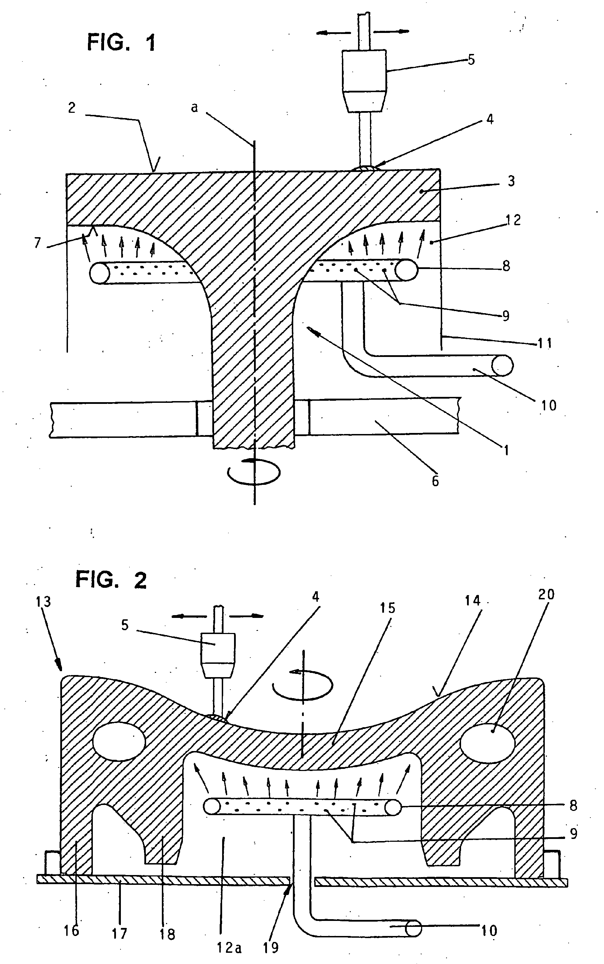

Der Figur 1 liegt ein Auslassventil 1 eines Zweitakt-Großdieselmotors zugrunde. Dabei kann es sich beispielsweise um ein für eine 80 cm-Bohrung geeignetes Auslassventil handeln. Dieses wird an der im Betrieb im Brennraum zugewandten Unterseite 2 seines Tellers 3 mit einem beispeilsweise aus einer Nickellegierung bestehenden Schutzbelag 4 versehen, der mittels einer Schweißvorrichtung 5 im Auftragschweißverfahren aufgebracht wird. Bei der Schweißvorrichtung 5 kann es sich um eine Schutzgasschweißvorrichtung (GMAW) oder um eine Elektro-Schlacke-Schweißvorrichtung (ESW) handeln.

Der Schweißvorrichtung 5 ist eine Spannvorrichtung 6 zugeordnet, in welche das Auslassventil 1 mit seinem Schaft einspannbar ist. Die Schweißvorrichtung 5 befindet sich oberhalb der Spannvorrichtung 6. Das Auslassventil 1 wird so in die Spannvorrichtung 6 eingespannt, dass die im Betrieb nach unten weisende Unterseite 2 des Ventiltellers 3 nach oben weist. Die Schweißvorrichtung 5 und das Auslassventil 1 sind so gegeneinander bewegbar, dass die ganze Fläche der Unterseite 2 mit einem Schutzbelag 4 versehen werden kann.

Im dargestellten Beispiel ist die Spannvorrichtung 6, wie durch einen Drehpfeil angedeutet ist, um eine vertikale Achse a rotierbar. Bei entsprechenden Antrieb der Spannvorrichtung 6 rotiert dementsprechend auch das in der Spannvorrichtung 6 aufgenommene Auslassventil um seine vertikale Achse. Die Schweißvorrichtung 5 ist, wie durch einen Richtungspfeil angedeutet ist, quer zur Achse a hin- und herbewegbar. Durch die hin- und hergehende Bewegung der Schweißvorrichtung 5 kann bei rotierendem Auslassventil 1 die ganze Fläche der Unterseite 2 des Ventiltellers 3 überstrichen werden. Selbstverständlich wäre dies auch mit einer anderen Kinematik, beispielsweise bei starr angeordnetem Auslassventil 1 und spiralförmig bewegbarer Schweißvorrichtung 5, möglich.

Die gegenseitige Bewegung zwischen Schweißvorrichtung 5 und Auslassventil 1 erfolgt so, dass der Schutzbelag 4 mit einer gewünschten Beschichtungsdicke aufgeschweißt wird. Im dargestellten Beispiel soll eine Beschichtungsrate von 11 kg/h vorgesehen sein. Bei einer Gesamtmasse des kompletten Schutzbelags 4 von 11 kg dauert dementsprechend der Auftragschweißvorgang ca. 1 h. Um dennoch eine übermäßige Erwärmung des Auslassventils während des Auftragschweißvorgangs zu verhindern, wird dieses während des Auftragschweißvorgangs gekühlt. Die Kühlung erfolgt zweckmäßig in dem Maße, dass nach einer gewissen Anlaufzeit die durch den Auftragschweißvorgang auf das Auslassventil 1 übertragene Wärme ganz oder weitgehend durch das verwendete Kühlmittel abgeführt wird.

Während der genannten Anlaufzeit, das heißt in der Anfangsphase des Auftragschweißvorgangs, ist die durch den Auftragschweißvorgang auf das bearbeitete Großmaschinen-Bauteil, hier in Form des Auslassventils 1, übertragene Wärme in der Regel noch größer als die durch das Kühlmittel abgeführte Wärme, so dass es während der genannten Anlaufzeit zu einer gewissen Erwärmung des bearbeiteten Großmaschinen-Bauteils kommt. Mit zunehmender Temperatur wird aber auch der Wärmeübergang verbessert, so dass sich nach einer gewissen Zeit zu dem oben genannten Gleichgewichtszustand zwischen zugeführter und abgeführter Wärme und damit zu keiner weiteren Erwärmung des Großmaschinen-Bauteils kommt. Die Kühlung wird zweckmäßig so dimmensioniert, dass der genannte Gleichgewichtszustand bei einer optimalen Bearbeitungstemperatur erreicht wird. In Fällen hier vorliegender Art beträgt diese 200°C. Die Kühlung erfolgt demnach so, dass das Großmaschinen-Bauteil während des Schweißvorgangs ab einer Temperatur von 200°C keine weitere Erwärmung erfährt.

Im dargestellten Beispiel wird zur Bewerkstelligung der gewünschten Kühlung die beim Schweißvorgang nach unten weisende Oberseite 7 des Ventiltellers 3, d.h. die der mit dem Schutzbelag 4 zu versehenden Oberfläche gegenüberliegende Oberfläche, mit einem Kühlmittel beaufschlagt. Als Kühlmittel findet zweckmäßig Wasser Verwendung, das auf die zu kühlende Oberfläche 7 aufgesprüht wird. Hierzu ist ein den Hals des Auslassventils 1 umfassendes, konzentrisch zur Achse a angeordnetes Ringrohr 8 vorgesehen, das im der zu kühlenden Oberfläche 7 zugewandten Bereich mit auf die Oberfläche 7 gerichteten Düsen 9 versehen ist, die einfach als Bohrungen ausgebildet sein können. Das Ringrohr 8 ist mittels einer Versorgungsleitung 10 mit einer Kühlmittelquelle, hier beispielsweise einem Wasserleitungsnetz, verbunden. Die Düsen 9 sind so angeordnet, dass die zu kühlende Oberfläche 7 gleichmäßig mit Kühlmittel beaufschlagt wird. Das den Ventilhals mit Abstand umfassende Ringrohr 8 kann stationär angeordnet sein.

Um zu verhindern, dass das Kühlmittel bzw. ein eventuell entstehender Kühlmitteldampf während des Schweißvorgangs mit dem Schutzbelag 4 in Berührung kommt, wird am Umfang des Ventiltellers 3 eine kragenförmig nach unten vorspringende Schutzmanschette 11 angebracht. Dabei kann es sich einfach um einen umlaufenden Blechmantel handeln. Die Schutzmanschette 11 begrenzt zusammen mit dem Ventilteller 3 einen umfangsseitig und nach oben geschlossenen, nur nach unten offenen Raum 12, in den das Kühlmittel hineingesprüht werden kann, ohne dass dies in den Bereich der mit dem Schutzbelag 4 zu versehenden Oberfläche vordringen kann. Das Kühlmittel kann durch die nach unten weisende Öffnung des Raums 2 einfach ablaufen. Selbstverständlich wäre es auch denkbar, den Raum 12 auch nach unten zu verschließen und mit einer bodenseitig abgehenden Ablaufleitung zu versehen. Das ablaufende Kühlmittel kann einfach einem Kanalisationssystem zugeführt werden. Vorteilhaft kann der genannte, geschlossene Raum 12 auch an eine Absaugeinrichtung zum Absaugen von Dampf angeschlossen sein. Der nötige Druckausgleich ergibt sich dabei in der Regel durch vorhandene Undichtheiten, so dass auf eine zusätzliche Luftzufuhr verzichtet werden kann.

Die Verfahrensdurchführung bei dem der Figur 2 zugrundeliegenden Beispiel entspricht im wesentlichen dem oben geschilderten Beispiel gemäß Figur 1. In der nachstehenden Beschreibung der Figur 2 finden daher für gleiche Teile gleiche Bezugszeichen Verwendung.

Bei dem der Figur 2 zugrundeliegenden Beispiel wird ein Kolbenkopf 13 des Kolbens eines Zweitakt-Großdieselmotors an der Oberseite 14 seines Kolbenbodens 15 mit einem Schutzbelag 4 versehen, der mittels einer Schweißvorrichtung 5 im Auftragschweißverfahren aufgebracht wird. Der Kolbenkopf 13 ist mit der unteren Stirnseite seines Mantels 16 auf einem rotierbaren Tisch 17 aufgenommen. Dieser kann mit geeigneten Spanneinrichtungen versehen sein. Oberhalb des rotierbaren Tisches 17 befindet sich die Schweißvorrichtung 5, die hin- und herbewegbar ist.

Die Unterseite des mit dem Schutzbelag 4 zu versehenden Kolbenbodens 15 wird während des Schweißvorgangs mit einem Kühlmittel beaufschlagt. Hierzu ist ein konzentrisch zur Kolbenachse angeordnetes Ringrohr 8 vorgesehen, das mit Düsen 9 versehen ist und über eine Versorgungsleitung 10 mit einer Kühlmittelquelle; zweckmäßig hier ebenfalls mit einer Kühlwasserquelle, in Form eines Wasserleitungsnetzes, verbunden ist.

Bei einem Kolbenkopf 13 hier vorliegender Art ergibt sich aufgrund des an den Kolbenboden 15 sich anschließenden Kolbenmantels 16 bzw. eines konzentrisch hierzu vorgesehenen Stützkragens 18 automatisch ein von einer umlaufenden Wand in Form des Kolbenmantels 16 bzw. des Stützkragens 18 umfangsseitig und hier durch den Kolbenboden 15, also das zu beschichtende Element, nach oben begrenzter Raum 12a, in den das Kühlmittel hineingesprüht werden kann, ohne dass dies in den Bereich der Oberseite 14 gelangen kann. Im dargestellten Beispiel befindet sich das Ringrohr 8 innerhalb des vom Stützkragen 18 umfangsseitig umfassten Raums. Der Tisch 17 ist zweckmäßig mit einer Öffnung 19 zum Durchführen der Versorgungsleitung 10 versehen. Im dargestellten Beispiel dient die Öffnung 19 gleichzeitig als Ablauföffnung für das ablaufende Kühlmittel. Auch ein Absaugen von Dampf aus dem Raum 12a wäre denkbar.

Der Kolbenkopf 13 ist hier im umfangsseitigen Bereich des Kolbenbodens 15 mit einem umlaufenden Kühlkanal 20 versehen, der mit nicht näher dargestellten Zu- und Ableitungen kommuniziert. Zur Erzielung einer zusätzlichen Kühlwirkung kann auch der Kühlkanal 20 mit einem Kühlmittel beaufschlagt werden. Bei rotierbarem Tisch 17 wäre hierbei eine den Zu- und Ableitungen zugeordnete Drehdurchführung erforderlich. Bei stehendem Tisch kann auf Drehdurchführungen verzichtet werden, was die Beaufschlagung des Kanals 20 vereinfacht.

Vorstehend sind zwar einige bevorzugte Anwendungsbeispiele der Erfindung näher erläutert, ohne dass jedoch hiermit eine Beschränkung verbunden sein soll. So kann das erfindungsgemäße Verfahren selbstverständlich auch im Zusammenhang mit anderen Großmaschinen-Bauteilen, beispielsweise Zylinderbüchsen oder Zylinderdeckeln von Zweitakt-Großdieselmotoren, Verwendung finden.

## Patentansprüche

1. Verfahren zum Versehen eines Großmaschinen-Bauteils, insbesondere eines Kolbenkopfes oder Auslassventiltellers eines Zweitakt-Großdieselmotors, mit einem Schutzbelag (4), der durch Auftragschweißen auf die zugeordnete Oberfläche (2 bzw. 14) aufgebracht wird, und eine Masse von mindestens 10 kg aufweist, **dadurch gekennzeichnet, dass** das mit dem Schutzbelag (4) zu versehende Großmaschinen-Bauteil während des Auftragschweißvorgangs gekühlt wird, wobei die Kühlung so erfolgt, dass in der Anfangsphase des Auftragschweißvorgangs die hierdurch auf das Großmaschinen-Bauteil übertragene Wärme größer als die durch das Kühlmittel abgeführte Wärme ist und dass nach dieser Anlaufzeit die durch den Auftragschweißvorgang zugeführte Wärme der durch das Kühlmittel abgeführten Wärme in etwa entspricht.

2. Verfahren nach Anspruch 1, **dadurch gekennzeichnet, dass** als Kühlmittel Wasser Verwendung findet.

3. Verfahren nach einem der vorhergehenden Ansprüche, **dadurch gekennzeichnet, dass** das Großmaschinen-Bauteil während des Auftragschweißvorgangs an der der mit dem Schutzbelag (4) zu versehenden Oberfläche (2 bzw. 14) gegenüberliegenden Oberfläche mit einem Kühlmittel beaufschlagt wird.

4. Verfahren nach einem der vorhergehenden Ansprüche, **dadurch gekennzeichnet, dass** das Großmaschinen-Bauteil zum Aufschweißen des Schutzbelags (4) so angeordnet wird, dass es von oben mit dem Schutzbelag (4) versehen und von unten gekühlt wird.

5. Verfahren nach einem der vorhergehenden Ansprüche, **dadurch gekennzeichnet, dass** das Kühlmittel auf die zugeordnete Oberfläche aufgesprüht wird.

6. Verfahren nach Anspruch 5, **dadurch gekennzeichnet, dass** das Kühlmittel mittels wenigstens eines an eine Kühlmittelquelle angeschlossenen, mit Sprühdüsen (9) versehenen Sprührohrs (8) auf die zugeordnete Oberfläche aufgesprüht wird.

7. Verfahren nach Anspruch 5 oder 6, **dadurch gekennzeichnet, dass** das Kühlmittel in einen von einer umlaufenden Wand (11 bzw. 16, 18) umfassten Raum (12 bzw. 12a) hineingesprüht wird.

8. Verfahren nach Anspruch 7, **dadurch gekennzeichnet, dass** das Kühlmittel bei einem Kolbenkopf (13) in den vom Kolbenmantel (16) oder einem hierzu konzentrischen Stützkragen (18) begrenzten Raum (12a) hineingesprüht wird.

9. Verfahren nach Anspruch 7, **dadurch gekennzeichnet, dass** bei einem Auslassventil (1) zur Bildung eines mit dem Kühlmittel beaufschlagbaren, umfangsseitig geschlossenen Raums (12) am Umfang des Ventiltellers (3) ein umlaufender Mantel (11) angebracht wird.

10. Verfahren nach einem der Ansprüche 7 - 9, **dadurch gekennzeichnet, dass** das Kühlmittel nach unten abgeführt wird.

11. Verfahren nach einem der Ansprüche 7 - 10, **dadurch gekennzeichnet, dass** der Raum (12 bzw. 12a) abgesaugt wird.

12. Verfahren nach einem der vorhergehenden Ansprüche, **dadurch gekennzeichnet, dass** bei einem Großmaschinen-Bauteil mit einem im Bereich der mit dem Schutzbelag (4) zu versehenden Wand vorgesehenen, durch wenigstens einen Kühlkanal (20) gebildeten, inneren Kühlsystem dieses während des Auftragschweißvorgangs mit einem Kühlmittel beaufschlagt wird.

13. Verfahren nach einem der vorhergehenden Ansprüche, **dadurch gekennzeichnet, dass** das Großmaschinen-Bauteil während des Auftragschweißvorgangs gedreht wird.

## Claims

1. A method for providing a component of a large machine, especially a piston head or an outlet valve disc of a large two-stroke diesel engine with a protective coating (4) which is applied to the associated surface (2 or 14) by means of surfacing, and which has a mass of at least 10 kg, **characterised in that** the large machine component to be provided with the protective coating (4) is cooled during the surfacing process, with the cooling being effected in such a manner that the heat transmitted to the large machine component during the starting phase of the surfacing process is greater than the heat dissipated by the coolant, and that after the starting phase the heat transmitted to the large machine component due to the surfacing process approximately corresponds the heat dissipated by the coolant.

2. A method in accordance with Claim 1, **characterised in that** the coolant used is water.

3. A method in accordance with any of the preceding claims, **characterised in that** during the surfacing process the surface of the large machine component opposite the surface (2 or 14) to be supplied with the protective coating (4) is supplied with a coolant.

4. A method in accordance with any of the preceding claims, **characterised in that** the large machine component, for the purpose of surface welding the protective coating (4) onto it, is arranged in such a manner that it is provided with the protective coating (4) from the top, while it is cooled from the bottom.

5. A method in accordance with any of the preceding claims, **characterised in that** the coolant is sprayed onto the associated surface to be cooled.

6. A method in accordance with claim 5, **characterised in that** the coolant is sprayed onto the associated surface by means of at least one spray tube (8) which is connected to a coolant source and provided with spray nozzles (9).

7. A method in accordance with claim 5 or 6, **characterised in that** the coolant is sprayed into a space (12 or 12a) which is encompassed by a circumferential wall (11 or 16, 18).

8. A method in accordance with claim 7, **characterised in that** in the case of a piston head (13) the coolant is sprayed into the space (12a) limited by the piston skirt (16) or a support collar (18) which is concentric to the said piston skirt.

9. A method in accordance with claim 7, **characterised in that** in the case of an outlet valve (1) a circumferential jacket (11) is provided at the circumference of the valve disc (3) for the purpose of forming a circumferentially closed space (12) which is supplyable with the coolant.

10. A method in accordance with any of the claims 7 - 9, **characterised in that** the coolant is discharged towards the bottom.

11. A method in accordance with any of the claims 7 - 10, **characterised in that** the content of the space (12 or 12a) is sucked off.

12. A method in accordance with any of the preceding claims, **characterised in that** in a large machine component having an inner cooling system which is located in the area of the wall to be provided with the protective coating (4) and formed by at least one coolant passage (20), the said cooling system is charged with a coolant during the surfacing process.

13. A method in accordance with any of the preceding claims, **characterised in that** the component of a large machine is rotated during the surfacing process.

## Revendications

1. Procédé destiné à pourvoir un composant d'une grande machine, en particulier une tête de piston ou une tête de soupape d'échappement d'un grand moteur Diesel à deux temps, d'un revêtement de protection (4) qui est appliqué par soudage à superposition sur la surface associée (2 ou bien 14) et qui présente une masse d'au moins 10 kg, **caractérisé par le fait que** le composant de la grande machine, qui est à pourvoir du revêtement de protection (4) est refroidi durant le processus de soudage à superposition, le refroidissement étant réalisé de telle manière que, dans la phase initiale du processus de soudage à superposition, la chaleur transmise par ce processus au composant de la grande machine est plus importante que la chaleur dissipée par l'agent refroidisseur et que, après ce temps initial, la chaleur amenée par le processus de soudage à superposition correspond à peu près à la chaleur dissipée par l'agent refroidisseur.

2. Procédé selon la revendication 1, **caractérisé par le fait que** l'agent refroidisseur utilisé est de l'eau.

3. Procédé selon l'une des revendications précédentes, **caractérisé par le fait que** la surface du composant de la grande machine, qui est située en regard de la surface (2 ou bien 14) à pourvoir dudit revêtement de protection (4) est alimentée en un agent refroidisseur durant le processus de soudage à superposition.

4. Procédé selon l'une des revendications précédentes, **caractérisé par le fait que**, pour appliquer par soudage ledit revêtement de protection (4), le composant de la grande machine est disposé de manière à être pourvu d'en haut du revêtement de protection (4) et à être refroidi d'en bas.

5. Procédé selon l'une des revendications précédentes, **caractérisé par le fait que** l'agent refroidisseur est appliqué par pulvérisation sur la surface associée.

6. Procédé selon la revendication 5, **caractérisé par le fait que** l'agent refroidisseur est appliqué par pulvérisation sur la surface associée au moyen d'au moins un tube de pulvérisation (8) qui est connecté à une source d'agent refroidisseur et qui est pourvu de pulvérisateurs (9).

7. Procédé selon la revendication 5 ou 6, **caractérisé par le fait que** l'agent refroidisseur est projeté en fines gouttelettes dans un espace (12 ou bien 12a) entouré d'une paroi périphérique (11 ou bien 16, 18).

8. Procédé selon la revendication 7, **caractérisé par le fait que**, dans le cas d'une tête de piston (13), l'agent refroidisseur est projeté en fines gouttelettes dans l'espace (12a) limité par la jupe de piston (16) ou par une collerette d'appui (18) concentrique par rapport à ceci.

9. Procédé selon la revendication 7, **caractérisé par le fait que**, dans le cas d'une soupape d'échappement (1), une chemise périphérique (11) est montée sur la circonférence de la tête de soupape (3) pour former un espace (12) fermé sur la circonférence qui peut être alimenté en agent refroidisseur.

10. Procédé selon l'une des revendications 7 à 9, **caractérisé par le fait que** l'agent refroidisseur est évacué vers le bas.

11. Procédé selon l'une des revendications 7 à 10, **caractérisé par le fait que** ledit espace (12 ou bien 12a) est soumis à une aspiration.

12. Procédé selon l'une des revendications précédentes, **caractérisé par le fait que**, dans le cas d'un composant de grande machine avec un système intérieur de refroidissement qui est prévu dans la zone de la paroi à pourvoir du revêtement de protection (4) et qui est formé par au moins un canal de refroidissement (20), ce système de refroidissement est alimenté en un agent refroidisseur durant le processus de soudage à superposition.

13. Procédé selon l'une des revendications précédentes, **caractérisé par le fait que** le composant de grande machine est tourné durant le processus de soudage à superposition.
